# EUROPÄISCHE PATENTSCHRIFT

(11) **EP 1 103 184 B1**
(45) Veröffentlichungstag und Bekanntmachung des Hinweises auf die Patenterteilung: **30.07.2008**
(21) Anmeldenummer: 00124678.4
(22) Anmeldetag: 11.11.2000
(51) Int. Cl.: A22B 5/00, A22B 3/10, B26B 3/00

(54) **Aufbrechmesser**
Gutting knife
Couteau à éviscérer

(30) Priorität: 27.11.1999 DE 29920823 U
(43) Veröffentlichungstag der Anmeldung: 30.05.2001
(73) Patentinhaber: Macek, Leopold, 97717 Sulzthal (DE)
(72) Erfinder: Macek, Leopold, 97717 Sulzthal (DE)

(56) Entgegenhaltungen:
- WO-A-97/27756
- DE-A- 2 202 781
- US-A- 1 498 753
- US-A- 1 843 223
- US-A- 3 241 236
- US-A- 3 321 783

## Beschreibung

Aufbruchmesser dienen dazu ein erlegtes (geschossenes) Wild oder ein geschlachtetes Tier "aufzubrechen", das heißt, zu öffnen um die inneren Organe entfernen zu können.

Die bekannten Aufbruchmesser bestehen aus einem Heft (Griff) und einer, ein- oder beidseitig scharf geschliffenen Klinge. Mit diesem Aufbruchmesser wird das Fell (Haut) am Bauch des Tieres aufgeschnitten und das Bauchfell bis zum Brustkorb aufgeschlitzt. Mit diesen Messern kann auch das herausgelöste Fleisch zerteilt/zerlegt werden.
Damit die inneren Organe (Schlund, Lunge, Magen, Leber/Galle, Darm, Blase etc.) unbeschädigt entfernt werden können, benötigt man zum Zerteilen/Durchtrennen von Knochen, beispielsweise Brustknochen, ausser dem Aufbruchmesser weitere Werkzeuge, wie Knochenzange, Knochensäge und ähnliche.

Die unbeschädigte Entfernung der inneren Organe ist von wesentlicher Bedeutung für die Qualität und die Verwendbarkeit des Fleisches als menschliches Nahrungsmittel, da das Austreten von Magen-, Darm-, Blasen- oder Gallenblasen- inhalt ein sofortiges Ausspülen der Tierkörperöffnung mit Wasser erforderlich macht. Dieses ist eine Maßnahme, die bei der Jagd oder außerhalb eines Schlachthauses kaum oder nicht durchgeführt werden kann.

Die Erfindung hat sich die Aufgabe gestellt ein Aufbruchmesser zu schaffen, welches die, zum Öffnen eines erlegten/geschlachteten Tieres und zur Entfernung der inneren Organe, erforderlichen Werkzeuge aufweist.

Die Druckschrifft US-A-1498753 zeigt ein Messer zum Öffnen der Körperhülle eines Tieres. Dieses Messer weiser schon eine Klinge mit zwei fortsätzen auf, die einen Schlitz mit umlaufender Schneide bilden und dessen einer fortsatz ein mit einer Kugel versehenes stumpfes Ende aufweist.

Die Aufgabe wird erfindungsgemäß mit den Merkmalen des Hauptanspruches gelöst.

Auf den Zeichnungen sind beispielsweise Ausführungsformen des Erfindungsgegenstandes schematisch dargestellt.

Es zeigt:

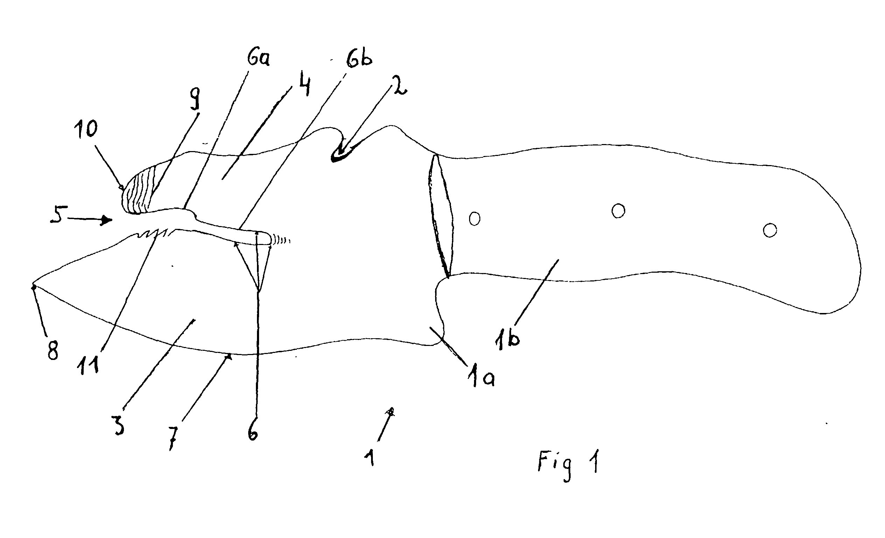

- Fig.1: eine Seitenansicht des erfindungsgemäßen Aufbruchmessers,

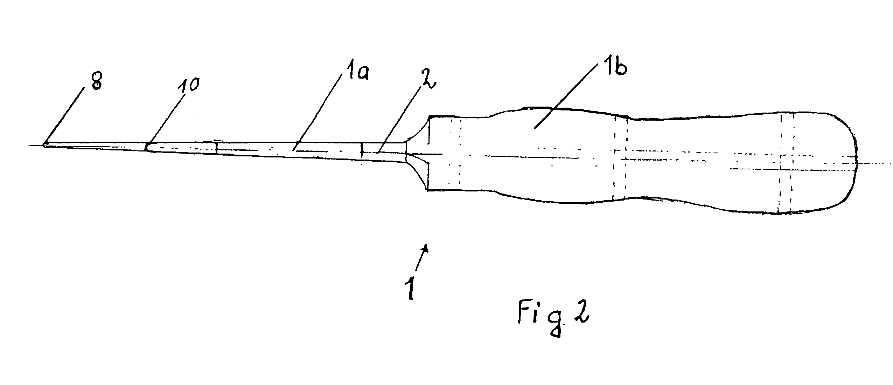

- Fig. 2: eine Draufsicht auf das Aufbruchsmesser nach Fig. 1,
- Fig. 3: eine Seitenansicht einer weiteren Ausführungsform des Aufbruchsmesser nach Fig. 1, mit teilweise aufgeschnittenem Heft (Griff)

Das mit 1 bezeichnete Aufbrechmesser besteht aus einer Klinge 1a, die in einem Heft/Griff 1b befestigt ist. Die Klinge la weist zwei Fortsätze 3 und 4 auf. Die beiden Fortsätze 3 und 4 umschließen einen nach vorn offenen Schlitz 5. Auf der oberen Seite des Fortsatzes 4 ist eine, mit einer umlaufenden Schneide versehene Ausnehmung 2 angebracht. Diese Ausnehmung 2 ist vorzugsweise in einem Winkel von 45° zur Längsachse des Aufbruchmessers 1, und, mit der offenen Seite zum Heft/Griff 1b gerichtet, angeordnet. Der Schlitz 5 ist mit einer umlaufenden Schneide 6 versehen. Der Fortsatz 3 weist an seiner nach aussen gerichteten Seite eine Schneide 7 auf, die in einer dornförmigen Spitze 8 endet, während die zum Schlitz 5 gerichtete Seite mit einer Verzahnung 11 versehen ist.

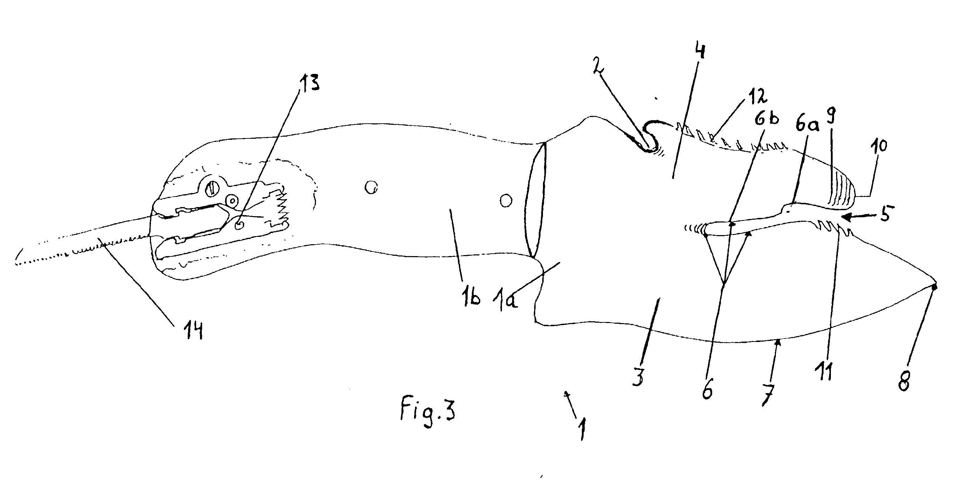

Der Fortsatz 4 weist an seiner stumpfen Spitze 10 eine Verdickung, eine sogenannte Wulst 9 auf. Die umlaufende Schneide 6 ist im Bereich zwischen Spitze 10 und Ende des Schlitze 5 an dem Fortsatz 4 mäanderförmig 6a, 6b ausgebildet. Zwischen Spitze 10 und Ausnehmung 2 kann der Fortsatz 4 mit einer Sägeverzahnung 12 versehen sein (Fig.3).
Zur Aufnahme weiterer, zweckmäßiger Weise auswechselbarer, Werkzeuge wird im Innern des Heftes/Griffes 1b eine Haltevorrichtung 13 angebracht, in die unterschiedliche Sägeblätter 14 eingesteckt und gehalten werden.

Die Funktionsweise der einzelnen Messerklingen-Ausbildungen ist folgende:
bei dem erlegten Tier wird mit der dornförmigen Spitze 8 die Bauchdecke vorsichtig durchstochen. In diese Öffnung der Bauchdecke wird dann die mit einem Wulst 9 versehene stumpfe Spitze 10 eingeführt. Das Aufbruchmesser 1 wird so in Richtung des Tierhinterteils geführt, dass die Tierhaut in dem Schlitz 5 durch die umlaufende Schneide 6 durchtrennt wird, wobei die stumpfe Spitze 10 im Tierkörper an der Innenseite der Tierhaut anliegt, so dass beim Drücken des Aufbrechsmessers 1 in Richtung des Tierhinterteils die Wulst 9 die in unmittelbarer Nähe der Klinge la liegenden Organe zur Seite und von der Klinge 1a wegschiebt, derart, dass eine Verletzung, beispielweise des Magen, Darms, Blase etc., ausgeschlossen ist.

Der Spalt 5 zwischen den Fortsätzen 3 und 4 bewirkt, dass ein "Ausrutschen" d.h. ein unbeabsichtigtes Abgleiten in den Tierkörper ausgeschaltet ist, so dass durch diese "zwangsweise" Führung der Klinge la auch ein weniger geübter Benutzer des Aufbrechmessers 1 eine einwandfreie Öffnung des Tierkörpers erreicht.

Durch die mäanderförmige Ausbildung 6a, 6b der Schneide 6 am Fortsatz 4, zwischen der stumpfen Spitze 10 und dem Spaltende, wird, bei der Vorwärts-Bewegung des Aufbrechmessers 1, der Bereich 6a ein Einschneiden und der Bereich 6b ein Durchtrennen der Tierhaut bewirken.

Wenn die Bauchdecke des Tieres bis zum Schlossknochen (symphysis pubica pelvina) aufgetrennt ist, muss der Schlossknochen, zur unbeschädigten Entnahme des Darm- und gegebenenfalls Blasen-Ausgangs, durchtrennt werden. Bei der Durchtrennung des Schlossknochens stützt sich die Verzahnung auf dem Knochen ab und das Aufbrechmesser 1 wird mit Auf- und Abwärtsbewegung um die Verzahnung 11 durch den Schlossknochen geführt.

Mit den gleichen Bewegungen des Aufbrechmessers 1 werden, nach dem Durchschneiden der Haut/des Fells entlang dem Brustbein, die Knochen des Brustkorbes durchtrennt. Danach können die inneren Organe, wie Luft- und Speiseröhre, Herz, Lunge etc. unbeschädigt entfernt werden.

Mit der schneidenden Ausnehmung 2 lassen sich Sehnen und Muskelbefestigungsfasern durchtrennen.

Die Sägeverzahnung 12 auf der Oberseite des Fortsatzes 4 ist so schräg zum Heft/Griff 1b gerichtet, dass beim "Durchfahren" des Bauchraumes keine inneren Organe des Tieres verletzt werden können.
Mit der Sägeverzahnung 12 lassen sich die Röhrenknochen des Tieres durchtrennen, dabei tritt die Sägewirkung dann ein wenn das Aufbrechmesser 1 "gezogen" und nicht "geschoben" wird.

Wie in Fig. 3 dargestellt kann eine Befestigungsvorrichtung 13 zur Aufnahme weiterer Werkzeuge, wie zum Beispiel Sägeblätter 14, in dem Heft/Griff 1b untergebracht werden.

Mit diesem multifunktionalen Aufbrechmesser 1 ist der Waidmann (Jäger, Förster) in der Lage ein erlegtes (geschossenes) Wild, ohne Verletzung der inneren Organe auszuweiden (auszunehmen) und das Tier an Ort und Stelle, so weit gewünscht, zu zerteilen.

## Patentansprüche

1. Aufbruchmesser (1) bestehend aus einem Handgriff (1b) in welchem eine Klinge (la) befestigt ist die zwei Fortsätze (3 u. 4) aufweist, welche durch einen Schlitz (5) getrennt sind, wobei der Schlitz (5) als umlaufende Schneide (6) ausgebildet ist und der eine Fortsatz (3) an seiner nach aussen gerichteten Seite mit einer Schneide (7), die in eine dornförmige Spitze (8) ausläuft versehen ist, während der andere Fortsatz (4) eine stumpfe Spitze (10) aufweist, wobei ein Teil des einen Fortsatzes (3) mit einer zum Schlitz (5) gerichteten Verzahnung (11) versehen ist.

2. Aufbruchmesser (1) nach Anspruch 1, **dadurch gekennzeichnet, dass** ein Teil der umlaufenden Schneide (6) am anderen Fortsatz (4), zwischen der Stumpfen Spitze (10) und Ende des Schlitzes (5), mäanderförmig (6a,6b) ausgebildet ist.

3. Aufbruchmesser (1) nach Anspruch 1 und/oder 2, **dadurch gekennzeichnet, dass** die Klinge (la) eine, mit einer umlaufenden Schneide versehene Ausnehmung (2) aufweist.

4. Aufbruchmesser nach Anspruch 3, **dadurch gekennzeichnet, dass** die Ausnehmung (2) in einem Winkel von etwa 45° zur Längsachse des Aufbruchmessers (1) angeordnet ist.

5. Aufbruchmesser nach einem oder mehreren der Ansprüche 3 und 4, **dadurch gekennzeichnet, dass** ein Teil des anderen Fortsatzes (4), zwischen der Stumpfen Spitze (10) und Ausnehmung (2), mit einer Sägeverzahnung (12) versehen ist.

6. Aufbruchmesser (1) nach einem oder mehreren der Ansprüche 1 bis 5, **dadurch gekennzeichnet, dass** im Innern des Heftes/Griffes (1b) eine an sich bekannte Haltevorrichtung (13) zur Aufnahme von Werkzeugen, wie Sägeblättern (14) angebracht ist.

## Claims

1. Gutting Knife (1) consisting of a Handle (1b), on wish the Blade (1a) is fixed, this presents two extensions (3 and4) that are separated by a slot (5). This slot is provided with a peripheral cutting edge (6). On its outward facing edge the first extension (3) has a cutting edge (7) which ends in a spike- like tip (8). The second extension(4) has a blunt point(10). The inward facing side of the extension (3) facing towards the slot (5) is provided with toothing (11).

2. Gutting Knife(1) for Patent Claim 1, **characterised by** the fact that a part of the cutting edge(6) on the other extension(4), between the blunt point(10) and the end of the siot(5) has a meander form(6a,6b).

3. Gutting Knife (1) for Patent Claim 1 and/or 2, **characterized by** the fact that the Blade (1a) has a slot (2) with peripheral cutting edge.

4. Gutting Knife (1) for Patent Claim 3, **characterized by** the fact that the recess (2) is oriented at an angle of 45° to the longitudinal axis of the Gutting Knife(1).

5. Gutting Knife for one or more of the Patent Claims 3 and 4, **characterized by** the fact that the other extension (4), between the blunt point (10) and recess (2) possesses a saw toothing.

6. Gutting Knife(1) for one or more of the Patent Claims 1 to 5, **characterized by** the fact that the inside of the Handle (1b) can accommodate with a holding device (13) further various saw blades or tools (14).

## Revendications

1. Couteau à éviscérer (1) formé par un manche (1b) auquel est fixé une lame (la), possédant deux embouts (3 et 4) qui sont séparés par une fente (5). Cette fente présente un coté aiguisé (6) et se termine à un embout par une pointe épineuse (8) alors que l'autre embout se termine par une pointe émoussée (10). Le coté intérieure de l'embout (3) faisant face à la fente possède une denture (11).

2. Couteau à éviscérer (1) selon la revendication 1, identifié par le fait qu'une partie du pourtour de la lame (6) présente sur l'embout (4) entre la pointe émoussée (10) et la fin de la fente (5) une forme de méandre (6a,6b).

3. Couteau à éviscérer (1) selon la revendication 1 et/ou 2, identifié par le fait que la lame (la) possède une fente (2) avec un coté aiguisé de bout en bout.

4. Couteau à éviscérer selon la revendication 3. , identifié par le fait que la fente (2) se trouve à un angle de 45° par rapport à l'axe longitudinal du couteau à éviscérer(1).

5. Couteau à éviscérer selon une ou plusieurs des revendications 3 et 4, identifié par le fait qu'une partie de l'un des embouts (4) entre la pointe émoussée (10) et la fente (2) est munie d'un tranchant sciant (12).

6. Couteau à éviscérer (1) selon une ou plusieurs des revendications 1 à 5, identifié par la fait que l'intérieur du manche (1b) est munie d'un système (13) permettant de maintenir des outils tel que scies (14) ou autres.
